**Europäisches Patentamt**

(19) **European Patent Office**

**Office européen des brevets**

(11) Veröffentlichungsnummer: **0 224 044 B1**

(12) **EUROPÄISCHE PATENTSCHRIFT**

(45) Veröffentlichungstag der Patentschrift:
21.06.89

(51) Int. Cl.⁴: **B60S 3/04**

(21) Anmeldenummer: **86114779.1**

(22) Anmeldetag: **24.10.86**

(54) Verfahren zum Einstellen der Empfindlichkeit einer Lichtschranke zum Steuern einer Trocknungseinrichtung in einer Fahrzeugwaschanlage und danach arbeitende Trocknungseinrichtung.

(30) Priorität: **16.11.85 DE 3540767**

(43) Veröffentlichungstag der Anmeldung:
**03.06.87 Patentblatt 87/23**

(45) Bekanntmachung des Hinweises auf die Patenterteilung:
**21.06.89 Patentblatt 89/25**

(84) Benannte Vertragsstaaten:
**FR GB SE**

(56) Entgegenhaltungen:
**DE-A- 1 934 331**
**DE-A- 3 005 493**
**DE-A- 3 208 527**
**FR-A- 1 472 567**
**US-A- 3 251 084**
**US-A- 3 323 228**

**Die Akte enthält technische Angaben, die nach dem Eingang der Anmeldung eingereicht wurden und die nicht in dieser Patentschrift enthalten sind.**

(73) Patentinhaber: **Machin, Roy, Im Kälblesbiegel 16, D-7410 Reutlingen(DE)**

(72) Erfinder: **Machin, Roy, Im Kälblesbiegel 16, D-7410 Reutlingen(DE)**

(74) Vertreter: **Kucher, Hans, Dipl.-Ing., Richard-Strauss-Weg 4, D-7410 Reutlingen(DE)**

ACTORUM AG

**Beschreibung**

Die Erfindung betrifft ein Verfahren zum Einstellen der Empfindlichkeit einer Lichtschranke zum Steuern einer Trocknungseinrichtung in einer Waschanlage für Fahrzeuge gemäß dem Oberbegriff des Anspruchs 1 sowie eine danach arbeitende Trocknungseinrichtung gemäß dem Oberbegriff des Anspruchs 4.

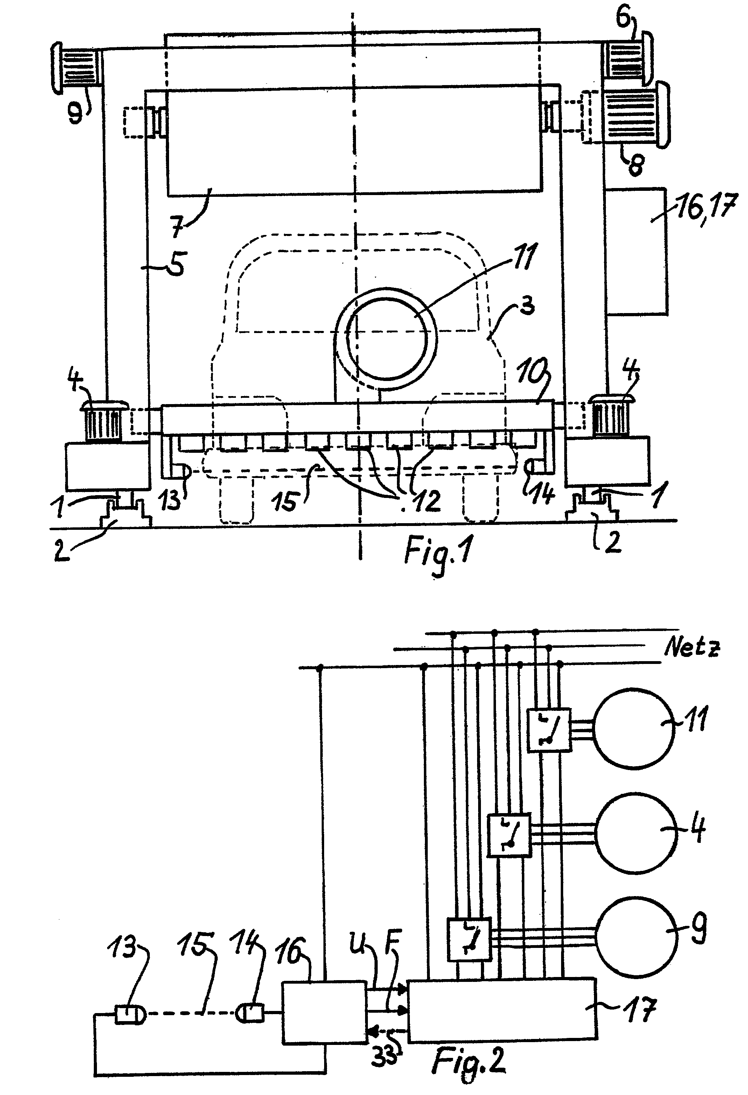

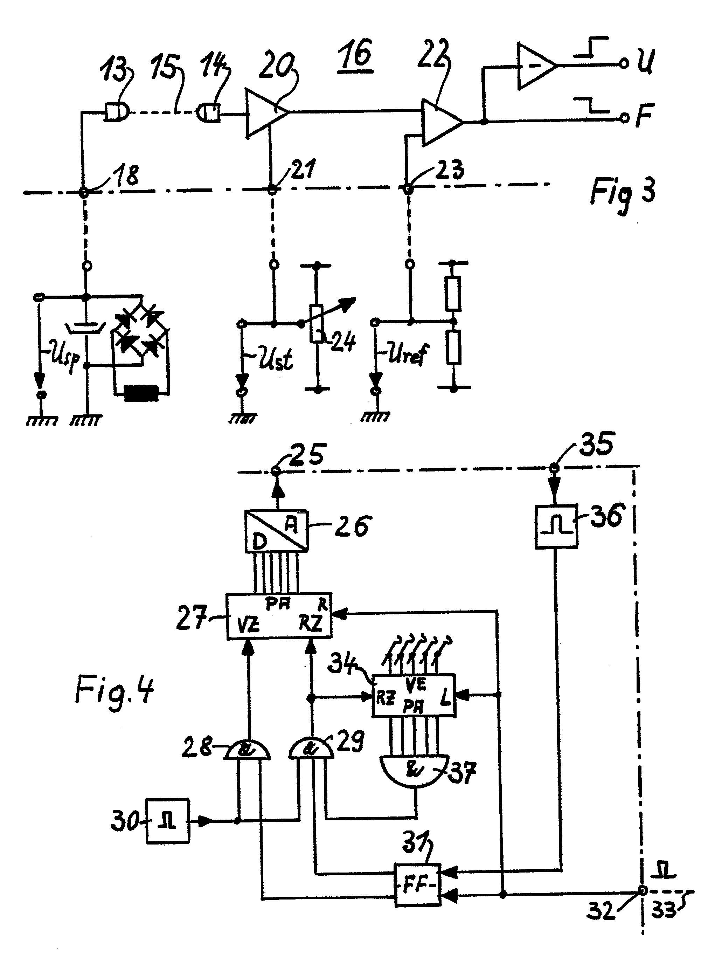

Ein solches Verfahren ist bei Kraftfahrzeugwaschanlagen allgemein bekannt. Figur 1 zeigt eine schematische Vorderansicht einer bekannten Kraftfahrzeugwaschanlage mit einer Trocknungseinrichtung, Figur 2 ein vereinfachtes Blockschaltbild der elektrischen Maschinensteuerung der in Figur 1 dargestellten Anordnung und Figur 3 einen eine Aufbereitungseinrichtung für das Schrankensignal darstellenden Ausschnitt aus dem Blockschaltbildgemäß Figur 2.

In Figur 1 trägt ein auf Rollen 1 auf Schienen 2 in Richtung einer Längsachse eines zu waschenden und zu trocknenden Kraftfahrzeuges 3 mit Hilfe von Fahrmotoren 4 verfahrbarer Maschinenrahmen 5 eine mittels eines Hubmotors 6 heb- und senkbare Horizontalwaschbürste 7, die von einem Waschbürstenmotor 8 angetrieben wird. Im selben Maschinenrahmen 5 ist auf der Gegenseite ein mit Hilfe eines zweiten Hubmotors 9 heb- und senkbares Teil 10 gelagert, das ein Trockengebläse mit Gebläsemotor 11, von diesem Gebläse gespeiste Trockenluftdüsen 12 und eine einen Lichtsender 13 und einen Lichtempfänger 14 aufweisende Lichtschranke trägt, deren Strahlengang 15 unterhalb der Trocknungsluftdüsen 12 verläuft.

Zu Beginn des Trocknungsvorganges nimmt das verfahrbare Teil 10 der Trocknungseinrichtung vor oder hinter dem Kraftfahrzeug 3 eine Anfangsstellung ein und bewegt sich aus dieser in Fahrzeuglängsrichtung, bis das Fahrzeug 3 in den Strahlengang 15 der Schranke eintritt. Eine in Figur 3 näher dargestellte Signalaufbereitungseinrichtung 16 meldet die Strahlunterbrechung an die unter anderem die Fahrmotoren 4 und den zweiten Hubmotor 9 steuernde, in Figur 2 näher dargestellte Maschinensteuerung 17, die das Anheben des Teiles 10 veranlaßt, bis wieder Strahlfreigabe gemeldet wird. Während des Hubvorganges kann die Längsbewegung unterbrochen oder verlangsamt sein, und der Vorgang kann sich längs einer ersten Teilstrecke mehrmals wiederholen. Auf einer zweiten Teilstrecke der Längsbewegung wird das Teil 10 beim Empfangen eines die Strahlfreigabe meldenden Signales abgesenkt, wobei wiederum die Längsbewegung verlangsamt oder unterbrochen werden kann.

In der Signalaufbereitungseinrichtung (16 in Figur 3) ist an eine Versorgungsklemme 18 des Lichtsenders 13 eine von einer Spannungsquelle 19 gelieferte Speisespannung Usp angelegt. Das vom Lichtempfänger 14 abgegebene Schrankensignal wird in einem Verstärker 20, dessen Verstärkungsfaktor von einer an einer Steuerklemme 21 anliegenden Steuerspannung Ust bestimmt ist, verstärkt und in einer Schwellwertschaltung, die von einem als Spannungsvergleicher arbeitenden Operationsverstärker 22 gebildet ist, mit einer an einer weiteren Eingangsklemme 23 liegenden Referenzspannung Uref verglichen. Ein Ausgangssignal F der Schwellwertschaltung und gegebenenfalls ein daraus abgeleitetes gegenläufiges Signal U gelangt bzw. gelangen als Steuersignale an die Machinensteuerung (17 in Figur 2), die die Strahlfreigabe bzw. die Strahlunterbrechung kennzeichnen. Diese Signale bewirken das Heben und Senken des Teiles 10 während oder abwechselnd mit dessen Längsbewegung derart, daß die Trocknungsluftdüsen 12 einen gehörigen Sicherheitsabstand von der Kontur des Kraftfahrzeuges 3 einhalten.

Bei den bekannten Trocknungseinrichtungen kann sich die Ansprechempfindlichkeit ihrer Licht- oder Ultraschallschranken verändern, z.B. durch eine spritzwasser- oder verschmitzungsbedingte Erhöhung der Strahldämpfung zwischen Strahlsender und Strahlempfänger der Schranke, durch Beeinflussung durch Umlicht oder durch temperatur- oder alterungsbedingte Veränderungen von Bauteilekennwerten.

Da bei Eintritt des Fahrzeuges in den Strahlengang, insbesondere bei Eintritt gewölbter Fahrzeugfront- oder -heckscheiben in einen Lichtstrahl, keine vollkommene Strahlunterbrechung aufzutreten braucht, sondern häufig eine nur mäßige Strahlabschwächung erfolgt, kann es vorkommen, daß die Schrankensignale "Strahlunterbrechung" bzw. "Strahlfreigabe" ausbleiben oder zu spät erfolgen, so daß die von den Schrankensignalen gesteuerte Bahn des die Trocknungseinrichtung tragenden Teiles keinen ausreichenden Sicherheitsabstand von der Kontur des Fahrzeuges einhält. Daher ist bei den bekannten Anlagen die Ansprechempfindlichkeit der Schranke von Hand einstellbar, was durch Verändern der Ansprechschwelle der Schwellwertschaltung oder durch Verändern der Verstärkung des Schrankensignales oder durch Verändern der Strahlstärke des Strahlsenders bewirkt wird.

Zu diesem Zweck ist bei den bekannten Trocknungseinrichtungen eine der an den Klemmen 18 oder 21 oder 23 anliegenden Spannungen Usp oder Ust oder Uref von Hand einstellbar, wie dies in Figur 3 für die an der Klamme 21 anliegende Spannung Ust mit Hilfe des Potentiometers 24 angenommen ist.

Im praktischen Betrieb hat aber die manuelle Nachstellbarkeit der Ansprechempfindlichkeit den großen Nachteil, daß häufig eine falsche Empfindlichkeit eingestellt wird, da die Nachstellung meist durch einen technischen Laien vorgenommen wird. Es können so schwere Beschädigungen auftreten, wenn die Schranke zufolge der falschen Einstellung auf das Ein- und Austreten von Fahrzeugteilen in ihren Strahlengang nicht mehr anspricht. Es kommt dann zur Kollision des die Trocknungsmittel tragenden Teiles der Einrichtung mit dem Fahrzeug.

Der Erfindung liegt die Aufgabe zugrunde, bei einem Verfahren der eingangs genannten Art sicherzustellen, daß die Ansprechempfindlichkeit immer einen das sichere Arbeiten der Einrichtung gewährleistenden Wert aufweist.

Diese Aufgabe wird durch die im Anspruch 1 gekennzeichneten Maßnahmen gelöst.

Auf diese Weise erübrigt sich jedes nachträgliche manuelle Nachstellen de Schrankenempfindlichkeit, und es werden Schäden an den Fahrzeugen und an der Trocknungseinrichtung sicher vermieden.

Aus der DE-A 32 08 527 ist es noch bekannt, in einer Fahrzeugwaschanlage , in der ein Fahrzeug an mehreren Arbeitsstationen vorbeibewegt wird, die Kontur des Fahrzeuges schon vor Erreichen der ersten Arbeitsstation mittels einer Abtastvorrichtung mit mehreren übereinander angeordneten Strahlungsschranken festzustellen und zu speichern und die gespeicherten Konturendaten später beim Durchgang des Fahrzeuges durch die einzelnen Arbeitsstationen zur konturabhängigen Positionierung von deren Arbeitsmitteln zu verwenden.

Vorteilhafte Ausgestaltungen der Erfindung sind in den Unteransprüchen gekennzeichnet.

Die Erfindung wird nachstehend anhand des in Figur 4 der Zeichnung dargestellten Ausführungsbeispieles erläutert. Die Signalaufbereitungseinrichtung 16 der erfindungsgemäßen Trocknungseinrichtung enthält einen sich selbsttätig auf eine das sichere Arbeiten der Schranke gewährleistende Spannung einstellenden Spannungsgeber. Seine Ausgangsklemme 25, an der der Ausgang eines Analog/Digitalwandlers 26 liegt, ist mit einer der Klemmen 18 oder 21 oder 23 der in Figur 3 dargestellten Signalaufbereitungseinrichtung 16 verbunden und ersetzt die betreffende damit verbundene Spannungsquelle, z.B. das Potentiometer 24 an der Klemme 21. Ein Vorwärts/Rückwärtszähler 27 steuert mit seinen Parallelausgängen PA den Digital/Analogwandler 26 und kann an seinem Vorwärtszähleingang VZ und an seinem Rückwärtszähleingang RZ über als Schalter wirkende Und-Gatter 28 bzw. 29 Fortschaltimpulse von einem Taktgenerator 30 empfangen. Zweite Eingänge der Und-Gatter 28 und 29 liegen jeweils an einem der beiden Ausgänge eines Flipflops 31, dessen Setzeingang an einer Startklemme 32 liegt, an die die Maschinensteuerung 17 in Figur 2 über eine dort gestrichelt dargestellte Verbindungsleitung 33 einen Impuls als Befehl zum Starten des Abgleichvorganges abgibt. Mit diesem Startimpuls wird auch der Zähler 27 zurückgestellt und ein Rückwärtszähler 34 mit der an seinen Voreinstelleingängen VE anliegenden Information geladen. Die über das geöffnete Und-Gatter 28 an den Zähleingang VZ gelangenden Fortschaltimpulse zählen den Zähler 27 hoch, wobei am Ausgang des Analog/Digitalwandlers eine ansteigende Spannungsrampe erzeugt wird, mit der beispielsweise der Verstärkungsgrad des Verstärkers 20 in Figur 3 soweit erhöht wird, bis das dadurch ansteigende verstärkte Ausgangssignal des Lichtempfängers 14 die an der Klemme 23 anliegende Referenzspannung erreicht, wodurch am Ausgang des Operationsverstärkers 22 ein Spannungssprung erfolgt. Dieser gelangt über die Prüfklemme 35 an einen Impulsformer 36, dessen Ausgang an eine Rücksetzeingang des Flipflops 31 einen Impuls als Befehl zum Stoppen des Abgleichvorganges sendet. Das Flipflop 31 kippt, sperrt das Und-Gatter 28 und öffnet das Und-Gatter 29, so daß in der Folge die Fortschaltimpulse an die beiden Rückwärtszähleingänge RZ der Zähler 27 und 34 gelangen, wodurch am Ausgang des Digital/Analogwandlers 26 die Rampenspannung wieder abfällt, bis der Rückwärtszähler auf Null zurückgezählt hat. Dies stellt ein mit seinen Parallelausgängen PA verbundenes Nor-Gatter 37 fest, dessen Ausgangsspannung verschwindet und das Und-Gatter 29 sperrt, womit der Abgleichvorgang beendet ist. Durch den Abgleichvorgang wird also zunächst die Ausgangsspannung an der Klemme 25 von Null ausgehend auf einen Wert gebracht, bei dem das Ausgangssignal des Operatinsverstärkers 22 springt und daher ein Wechsel zwischen den Signalen Strahlunterbrechung und Strahlfreigabe stattfindet, und anschließend in Gegenrichtung um einen kleinen Wert zurückgestellt, der durch die an die Voreinstelleingänge VE des Rückwärtszählers angelegte Information bestimmt ist.

**Patentansprüche**

1. Verfahren zum Einstellen der Empfindlichkeit einer Lichtschranke zum Stzeuern einer Trocknungseinrichtung in einer Waschanlage für Fahrzeuge mit einem in Richtung einer Längs- und einer Hochachse des Fahrzeuges relativ zu diesem mit Hilfe eines Fahr- (4) und eines Hubmotors (9) verfahrbaren Teil (10) der Trocknungseinrichtung, das Trocknungsmittel (11, 12) und eine Strahlungsschranke (13, 14, 15) trägt, deren Strahl in einem Abstand unterhalb der Trocknungsmittel (11, 12) verläuft und wobei das verfahrbare Teil (10) von einer unter anderem den Fahr- und den Hubmotor betätigenden Maschinensteuerung auf einer Bahn geführt wird, die einen etwa dem Abstand entsprechenden Sicherheitsabstand zu einer Fahrzeugkontur einhält, bei dem zu Beginn des Trocknungsvorganges das in einer unteren Anfangsstellung vor oder hinter dem Fahrzeug befindliche Teil (10) in Längsrichtung bewegt wird und bei dem in der Folge mindestens die Hub- und Senkbewegung des Teiles in Abhängigkeit von einem Schrankensignal gesteuert wird, dadurch gekennzeichnet, daß vor Beginn jedes Trocknungsvorganges die Empfindlichkeit (Usp, Ust) oder die Ansprechschwelle (Uref) der Schranke (15) und/oder einer ihr nachgeschalteten Aufbereitungseinrichtung (16) für das Schrankensignal selbsttätig auf einen zum Feststellen der Strahlfreigabe (F) gerade ausreichender Wert eingestellt wird.

2. Verfahren nach Anspruch 1, dadurch gekennzeichnet, daß vor Bewegungsbeginn des Teiles (10) die Empfindlichkeit (Usp, Ust) oder die Ansprechschwelle (Uref) bei vorhandenem Strahl zunächst so verändert wird, daß das Schrankensignal von einem die Strahlfreigabe (F) kennzeichnenden Signal in ein die Strahlunterbrechung (U) kennzeichnendes Signal wechselt und daß sodann die Empfindlichkeit (Usp, Ust) oder die Ansprechschwelle (Uref) im Gegensinn um einen kleinen definierten Wert verstellt wird.

3. Verfahren nach Anspruch 1 oder 2, dadurch gekennzeichnet, daß die selbsttätige Einstellung der Empfindlichkeit (Usp, Ust) oder der Ansprechschwelle (Uref) zusätzlich während des Ablaufes des Trocknungsvorganges vorgenommen wird.

4. Einrichtung zur Durchführung des Verfahrens nach Anspruch 2 mit einer Maschinensteuerung (17) zur gegebenenfalls lageabhängigen Steuerung der Antriebsmotore (4, 9) des Einrichtung, die ein Teil (10) der Einrichtung in Richtung einer Längs- und einer Hochachse des Fahrzeuges verfahren, das Trocknungsmittel (11, 12) und eine Strahlungsschranke (13, 14, 15) trägt, die einen Strahlungssender (13), einen Strahlungsempfänger (14) und eine Signalaufbereitungseinrichtung (16) umfaßt, die an die Maschinensteuerung (17) Schrankensignale abgibt, die Strahlunterbrechung (U) und Strahlfreigabe (F) kennzeichnen und die einen mit dem Ausgangssignal des Strahlungsempfängers (14) beaufschlagten Verstärker, eine mit einem Verstärkerausgangssignal beaufschlagte Schwellwertschaltung und einen einstellbaren Spannungsgeber enthält, der eine Steuerspannung (Ust, Uref, Usp) zur Einstellung des Verstärkungsgrades des Verstärkers (20) oder der Schwelle der Schwellwertschaltung oder der eine Speisespannung für den Strahlungssender (13) abgibt, dadurch gekennzeichnet, daß eine selbsttätige Einstellvorrichtung für den Spannungsgeber vorgesehen ist, die vor Beginn jedes Trocknungsvorganges von der Maschinensteuerung aktiviert wird und die die abgegebene Spannung zunächst so verändert, daß bei vorhandenem Strahl das Schrankensignal von einem die Strahlfreigabe (F) kennzeichnenden Zustand in einen die Strahlunterbrechung (U) kennzeichnenden Zustand wechselt, und sodann die abgegebene Spannung im Gegensinn um einen kleinen definierten Wert verändert, der für den Wechsel des Schrankensignals zum Zustand Strahlfreigabe (F) ausreicht.

## Claims

1. Method of adjusting the sensitivity of a light barrier for controlling a drying device in a car wash, having a component part (10) of the drying device displaceable in the direction of a longitudinal axis and a vertical axis of the vehicle relative thereto, by means of a drive motor (4) and a lifting motor (9) and provided with drying means (11, 12) and a light barrier (13, 14, 15), the beam of which barrier travels at some distance benath the drying means (11, 12), and wherein the displaceable part (10) is guided, by a control means actuating, inter alia, the drive motor and lifting motor, along a path which maintains a clearance from a vehicle configuration corresponding substantially to said distance, wherein the component part (10), which is situated in front of or behind the vehicle in a lower initial position, is moved in a longitudinal direction at the beginning of the drying operation, and wherein, in consequence, at least the raising and lowering movement of the component part is controlled in dependence on a barrier signal, characterised in that, prior to commencement of each drying operation, the sensitivity (Usp, Ust) or the response threshold (Uref) for the barrier (15) and/or for a processing means (16), connected subsequent thereto for processing the barrier signal, is automatically adjusted to a value which is actually sufficient for detecting the uninterrupted beam (F).

2. Method according in claim 1, characterised in that, prior to the commencement of movement of the component part (10), if the light beam is present, the sensitivity (Usp, Ust) or the response threshold (Uref) is initially changed so that the barrier signal changes from a signal denoting an uninterrupted beam (F), to a signal demoting interruption of the beam (U), and then the sensitivity (Usp, Ust) or the response threshold (Uref) is adjusted in the opposite direction by a small, defined value.

3. Method according to claim 1 or 2, characterised in that the automatic adjustment of the sensitivity (Usp, Ust) or of the response threshold (Uref) is additionally effected during the course of the drying operation.

4. Device for accomplishing the method according to claim 2, having a control means (17) for the possible position-dependent control of the drive motors (4, 6) of the device, which drive a component (10) of the device in the direction of a longitudinal axis and a vertical axis of the vehicle, which component carries drying means (11, 12) and a light barrier (13, 14, 15), which includes a light emitter (13), a light receiver (14) and a signal processing means (16), which transmits barrier signals to the control means (17), such signals denoting interruption of the light beam (U) and non-interruption of the light beam (F), and which signal processing means includes an amplifier, actuated by the output signal of the light receiver (14), a threshold value circuit, actuated by an output signal from the amplifier, and an adjustable voltage generator which generates a control voltage (Ust, Uref, Usp) for adjusting the degree of amplification of the amplifier (20) or the threshold of the threshold value circuit, or which voltage generator generates a feed voltage for the light emitter (13), characterised in that an automatic adjusting device for the voltage generator is provided, which is actuated by the control means prior to commencement of each drying operation and which initially changes the generated voltage so that, if the light beam is present, the barrier signal changes from a state denoting the non-interruption of the light beam (F) to a state denoting the interruption of the light beam (U), and then the generated voltage changes in the opposite direction by a small, defined valve which is sufficient for changing the barrier signal to the uninterrupted state (F).

## Revendications

1. Procédé pour régler la sensibilité d'un relais photoélectrique servant à commander un dispositif de séchage placé dans une installation de lavage pour véhicules et dont une partie (10) est déplaçable dans la direction d'un axe longitudinal et d'un axe vertical du véhicule, par rapport à ce dernier, à l'aide d'un moteur d'entraînement horizontal (4) et d'un moteur de levage (9) et porte des moyens de séchage (11, 12) et un relais à rayonnement (13, 14, 15), dont le faisceau est situé à une certaine distance au-dessous des moyens de séchage (11, 12), procédé selon lequel la partie mobile (10) est guidée, par l'intermédiaire d'une unité de commande du dispositif, qui actionne notamment le moteur d'entraînement horizontal et le moteur de levage, sur un trajet qui se maintient, par rapport à un contour du véhicule, avec un écartement de sécurité correspondant approximativement à ladite distance, et selon lequel, au début de l'opération de séchage, la partie (10) située dans une position de départ inférieure, en avant ou en arrière du véhicule, est déplacée dans la direction longitudinale, et par la suite au moins les mouvements d'élévation et d'abaissement de la partie mobile sont commandés en fonction d'un signal du relais, caractérisé en ce qu'avant le début de chaque opération de séchage, la sensibilité (Usp, Ust) ou le seuil de réponse (Uref) du relais (15) et/ou d'un dispositif (16), branché en aval de ce relais, de traitement du signal de ce dernier, est réglée automatiquement sur une valeur qui est juste suffisante pour déterminer la libération (F) du faisceau.

2. Procédé selon la revendication 1, caractérisé en ce qu'avant le début du déplacement de la partie (10), la sensibilité (Usp, Ust) ou le seuil de réponse (Uref) est tout d'abord modifié, avec le faisceau présent, de telle façon que le signal du relais soit commuté d'un signal caractérisant la libération (F) du faisceau en un signal caractérisant l'interruption (U) du faisceau, et qu'ensuite la sensibilité (Usp, Ust) ou le seuil de réponse (Uref) soit décalé par réglage, d'une faible valeur définie, en sens opposé.

3. Procédé selon la revendication 1 ou 2, caractérisé en ce que le réglage automatique de la sensibilité (Usp, Ust) ou du seuil de réponse (Uref) est réalisé en outre pendant le déroulement de l'opération de séchage.

4. Dispositif pour la mise en œuvre du procédé selon la revendication 2, comportant une unité de commande (17) servant à commander éventuellement, en fonction de la position, les moteurs d'entraînement (4, 6), qui déplacent, dans la direction d'un axe longitudinal et d'un axe vertical du véhicule, une partie (10) du dispositif, qui porte les moyens de séchage (11, 12) et un relais à rayonnement (13, 14, 15) comportant un émetteur de rayonnement (13), un récepteur de rayonnement (14) et un dispositif (16) de traitement des signaux qui délivre à l'unité (17) de commande du dispositif, des signaux du relais caractérisant l'interruption (U) et la libération (F) du faisceau, et qui contient un amplificateur recevant le signal de sortie du récepteur de rayonnement (14), un circuit à valeur de seuil recevant un signal de sortie de l'amplificateur, et un générateur réglable de tension qui délivre une tension de commande (Ust, Uref, Usp) servant à régler le degré d'amplification de l'amplificateur (20) ou le seuil du circuit à valeur de seuil, ou une tension d'alimentation pour l'émetteur de rayonnenment (13), caractérisé en ce qu'il est prévu, pour le générateur de tension, un dispositif automatique de réglage qui est activé par l'unité de commande du dispositif, avant chaque opération de séchage, et modifie tout d'abord la tension délivrée de manière que, lorsque le faisceau est présent, le signal du relais passe d'un état caractérisant la libération (F) du faisceau à un état caractérisant l'interruption (U) du faisceau, et modifie ensuite, en sens opposé, la tension délivrée d'une faible valeur définie, qui est suffisante pour commuter le signal du relais dans l'état de libération (F) du faisceau.

EP 0 224 044 B1

**Fig.1**

**Fig.2**

Fig 3

Fig.4